# EUROPÄISCHE PATENTSCHRIFT

(11) **EP 1 140 729 B1**
(45) Veröffentlichungstag und Bekanntmachung des Hinweises auf die Patenterteilung: **27.08.2003**
(21) Anmeldenummer: 99967948.3
(22) Anmeldetag: 16.12.1999
(51) Int. Cl.: C04B 30/02, B32B 18/00, F16L 59/00, E04B 1/76

(54) **MIKROPORÖSER WÄRMEDÄMMKÖRPER**
MICROPOROUS HEAT INSULATING BODY
CORPS THERMO-ISOLANT MICROPOREUX

(30) Priorität: 19.12.1998 DE 19859084
(43) Veröffentlichungstag der Anmeldung: 10.10.2001
(73) Patentinhaber: PROMAT INTERNATIONAL N.V., 2830 Tisselt (BE)
(72) Erfinder: ANTON, Octavian, B-1020 Brüssel (BE); OPSOMMER, Ann, B-1800 Koningslo (BE)
(74) Vertreter: Werner, Hans-Karsten, Dr.Dipl.-Chem.
(86) Internationale Anmeldenummer: EP9910003
(87) Internationale Veröffentlichungsnummer: WO00037389

(56) Entgegenhaltungen:
- EP-A- 0 078 119
- EP-A- 0 829 346
- WO-A-98/26928
- DE-A- 4 106 727
- US-A- 3 915 725
- US-A- 5 399 397
- PATENT ABSTRACTS OF JAPAN vol. 1999, no. 12, 29. Oktober 1999 (1999-10-29) & JP 11 185939 A (MATSUSHITA ELECTRIC IND CO LTD;TAIHEIYO CEMENT CORP), 9. Juli 1999 (1999-07-09)

## Beschreibung

Gegenstand der vorliegenden Erfindung ist ein mikroporöser Wärmedämmkörper, bestehend aus verpresstem Wärmedämmmaterial enthaltend 30 bis 90 Gew.% feinteiliges Metalloxid, 0 bis 30 Gew.% Trübungsmittel, 0 bis 10 Gew.% Fasermaterial und 10 bis 15 Gew. Anorganisches Bindemittel.

Ein derartiger Wärmedämmkörper ist beispielsweise beschrieben in der EP-A-0618 399, wobei jedoch gefordert wird, dass zumindest eine Oberfläche des Formkörpers Kanalporen mit einer Grundfläche der Pore von 0,01 bis 8mm² und einer Eindringtiefe von 5 bis 100 % bezogen auf die Dicke des Formkörpers aufweist und wobei pro 1cm² der Formkörperoberfläche 0,004 bis 10 Kanalporen enthalten sind.

Diese Wärmedämmkörper werden hergestellt durch trockenes Verpressen und anschließendes Sintern bei Temperaturen von 500 bis 900° C, wobei die Kanalporen erzeugt werden durch Bohren, Stanzen oder Fräsen sowie vorzugsweise durch Prägestempel. Durch diese Maßnahmen gelingt es, den beim raschen Erhitzen explosionsartig entweichenden Wasserdampf so abzuleiten, dass es nicht zur Zerstörung des Wärmedämmkörpers kommt.

Die Nachteile dieser Wärmedämmkörper sind das umständliche Herstellungsverfahren sowie die Verschlechterung der Wärmedämmeigenschaften, durch die Konvektion der Gase in den Poren.

Ein weiteres Verfahren zur Herstellung eines mikroporösen Körpers ist beschrieben in der EP-A- 0 623 567, bei welcher Oxide, Hydroxide und Carbonate der Metalle der 2. Hauptgruppe zusammen mit pyrogen hergestelltem SiO₂ sowie gegebenenfalls Al₂O₃ sowie einem Trübungsmittel und einer organischen Faser miteinander verpreßt und dann bei Temperaturen über 700° C gesintert werden. Dieses Verfahren ist nicht nur aufwendig, sondern weist darüber hinaus den Nachteil auf, dass das Wiederabkühlen dieses gut isolierenden Materials lange Zeit beansprucht.

Die Wärmedämmkörper unter Verwendung von hoch temperaturbeständigen Klebstoffen sowie einer Trübe, einem Kieselsol und einem Ton sind in der DE-C-40 20 771 beschrieben. Hierin ist auch weiterer Stand der Technik betreffend Herstellung und Zusammensetzung von Wärmedämmkörpern beschrieben. Der Nachteil aller Wärmedämmkörper mit organischen Bestandteilen und insbesondere organischem Fasermaterial besteht darin, dass diese bei sehr hohen Temperaturen verbrennen und unerwünschte Gasentwicklung aufweisen.

Die DE 41 06 727 beschreibt Wärmedämmkörper mit einer Umhüllung aus Kunststofffolie, wobei speziell schrumpffähige Kunststofffolien verwendet werden sollen. Auch diese Wärmedämmkörper - enthalten noch organisches Material und verlieren im Falle sehr hoher Erhitzung ihre Formbeständigkeit.

Die DE-C- 42 02 569 beschreibt Formwerkzeuge zum Pressen von Wärmedämmkörpern, insbesondere für elektrische Strahlungsheizkörper wie Kochplatten.

Die EP-A-686 732 beschreibt Wärmedämmplatten, die trocken verpreßt werden und innen und außen aus verschiedenem Material bestehen, die zu ihrer Stabilisierung Öffnungen aufweisen, die durchgehend aus dem äußeren Material bestehen. Auch diese Platten sind nur schwer herstellbar und weisen weder von der mechanischen Stabilität noch von ihren Wärmeisoliereigenschaften optimale Eigenschaften auf.

Ein weiterer Nachteil dieser Wärmedämmplatten ist, dass es schwierig ist, sie so zu schneiden und zu bearbeiten, dass die äußeren Schichten nicht beschädigt werden, es sei denn, es werden sehr teure Werkzeuge wie Laserschneider verwendet, da diese in der Lage sind, die neu entstehenden Schnittkanten glasig zu sintern.

Ein weiterer Versuch, die Probleme bei der Herstellung von Wärmdämmplatten zu lösen und dabei zu optimalen Eigenschaften zu kommen, ist beschrieben in der EP 0 829 346, in welcher ebenfalls noch einmal die Schwierigkeiten und Nachteile des Standes der Technik zusammengestellt sind.

Ein wesentliches Problem bei der Herstellung von Wärmedämmkörpern durch trockenes Verpressen der Bestandteile besteht darin, dass diese Materialien nach dem Verpressen dazu neigen, zurückzufedern und sich wieder auszudehnen, so dass zumindest mit sehr hohen Drucken gearbeitet werden muss, um einigermaßen brauchbare Ergebnisse zu erzielen.

Durch den Zusatz von Fasermaterial lässt sich zwar die. Biegefestigkeit der Wärmedämmplatten verbessern, jedoch führen höhere Mengen an Fasern in der Tendenz zur Delaminierung und verschlechtern die Kohärenz der verpressten Mischung während des kritischen Schrittes der Entformung.

Auf alle Fälle sollten die Wärmedämmplatten keine organischen und brennbaren Bestandteile enthalten, die beim hohen Erhitzen zur Entwicklung von teilweise auch toxischen Gasen führen können. Schließlich sollen die fertigen Wärmedämmkörper auch leicht und problemlos bearbeitet und verarbeitet werden können, so sollen sie beispielsweise problemlos gesägt, geschnitten und gebohrt werden können, wobei kein unerwünschter Staub anfallen soll.

Schließlich ist in vielen Fällen erwünscht, dass die Wärmedämmkörper gute elektrische Isolatoren sind, es gibt jedoch Anwendungsfälle, in denen es erwünscht ist, dass zumindest eine der Oberflächen elektrische Leitfähigkeit aufweist, um elektrostatische Aufladungen ableiten zu können.

All diese Aufgaben werden jetzt gelöst durch mikroporöse Wärmedämmkörper, bestehend aus trocken verpresstem Wärmedämmmaterial enthaltend 30 bis 90 Gew.-% Metalloxiden von Silizium und/oder Aluminium oder Mischungen davon, 0 bis 30 Gew.-% Trübungsmittel, 0 bis 10 Gew.-% anorganisches Fasermaterial und 0 bis 15 Gew.-% anorganisches Bindemittel, wobei der Körper zusätzlich 2 bis 45 Gew.%, vorzugsweise 5 bis 15 Gew.% Xonotlit enthält.

Vorzugsweise weist dieser mikroporöser Wärmedämmkörper auf einen oder beiden Oberflächen eine Abdeckung aus hitzebeständigem Material auf. Besonders bevorzugt sind Abdeckungen, die gleich oder verschieden sind und aus vorgepresstem Xonotlit, Glimmer oder Graphit bestehen. Bei Verwendung von Xonotlit und/oder Glimmer entstehen Abdeckungen, die gute Isolatoren sind. Bei Verwendung von Graphit entsteht eine Abdeckung, die elektrisch so weit leitend ist, dass sie zumindest elektrostatische Aufladungen ableiten kann. Bei gewissen Anwendungen kann es somit von Vorteil sein, die eine Seite der Abdeckung aus Xonotlit und/oder Glimmer und die andere Abdeckung aus Graphit herzustellen.

Die Herstellung der erfindungsgemäßen Wärmedämmkörper erfolgt durch trockenes Verpressen, wobei durch den Zusatz von Xonotlit eine bessere mechanische Verfestigung erfolgt, ohne dass ein Sintern bei hohen Temperaturen nötig ist. Weiterhin führt der Zusatz von Xonotlit zu einer geringeren Rückfederung nach dem Verpressen. Weiterhin verbessert sich die Biegefestigkeit der fertigen Wärmedämmkörper durch Zusatz von nur relativ geringen Mengen von Fasermaterial in erheblichem Maße, wenn Xonotlit Bestandteil des Wärmedämmkörpers ist.

Schließlich führt die Verwendung von Xonotlit im Kern zu einer Verbesserung der Homogenität der Trockenmischung sowohl während der Herstellung als auch im Endprodukt.

Die übrigen Bestandteile der erfindungsgemäßen Wärmedämmkörper können ausgewählt werden aus den für diesen Zweck bereits bekannten Materialien. Als feinteilige Metalloxide werden beispielsweise verwendet: pyrogen erzeugte Kieselsäuren, einschließlich Lichtbogenkieselsäuren, alkaliarme Fällungskieselsäuren, Siliciumdioxidaerogele, analog hergestellte Aluminiumoxide sowie deren Mischungen. Besonders bevorzugt sind pyrogen erzeugte Kieselsäuren.

Als Trübungsmittel verwendbar sind Titandioxid, Ilmenit, Siliciumcarbid, Eisen-II-Eisen-III-Mischoxide, Chromdioxid, Zirkonoxid, Mangandioxid, Eisenoxid, Siliciumdioxid, Aluminiumoxid und Zirkonsilikat sowie deren Mischungen. Diese Trübungsmittel dienen vor allen Dingen der Absorption und Streuung von Infrarotstrahlen und damit einer guten Dämmung gegen Wärmestrahlung im höheren Temperaturbereich.

Als Fasermaterialien geeignet sind Glasfasern, Steinwolle, Basaltfasern, Schlackenwolle,keramische Fasern und Whiskers sowie Faserschnüre, wie sie beispielsweise aus Schmelzen von Aluminium- und/oder Siliciumoxid gewonnen werden, sowie Mischungen derselben.

Gewünschtenfalls können auch zusätzlich anorganische Bindemittel verwendet werden, wie Wasserglas, Aluminiumphosphate, Boride des Aluminiums, des Titans, des Zirkons, des Calciums, Silicide wie Calciumsilicid und Calcium-Aluminium-Silicid,. Borcarbid sowie basische Oxide wie Magnesiumoxid, Calciumoxid und Bariumoxid.

Im allgemeinen sind solche Bindemittel aber bei Verwendung von Xonotlit nicht mehr erforderlich. Einige dieser Bindemittel können auch als trockene Vormischung mit Xonotlit eingesetzt werden, da sie sich dabei besonders leicht homogen einmischen lassen.

Als Xonotlit wird eingesetzt synthetisch hergestellter Xonotlit, da natürlicher Xonotlit nicht in ausreichenden Mengen und zu akzeptablen Preisen zur Verfügung steht. Die Herstellung von synthetischem Xonotlit ist beispielsweise beschrieben in der GB-1193172 sowie der EP 0 231 460.

Dieser synthetisch hergestellte Xonotlit fällt dabei im allgemeinen an in Form von Kügelchen, bestehend aus verfilzten Nadeln. Erfindungsgemäß können aber auch die nicht mehr oder kaum noch verfilzten Nadeln eingesetzt werden, die bei der Herstellung, Verwendung und Verarbeitung von Xonotlit zu anderen Zwecken anfallen und dabei auch mit den sonstigen Komponenten solcher Produkte vermischt sind.

Sofern eine Abdeckung einer oder beider Oberflächen der erfindungsgemäßen Wärmedämmkörper gewünscht ist, mit hitzebeständigem Material, können die handelsüblichen Folien aus Glimmer und Graphit eingesetzt werden. Es ist weiterhin möglich, aus vorgepresstem Xonotlit ein Schichtmaterial herzustellen, welches unten und oben in die Pressform für das übrige trockene Gemisch eingebracht und mitverpresst werden.

Die erfindungsgemäßen mikroporösen Wärmedämmkörper können in ihren Eigenschaften variiert werden, je nach gewünschtem Anwendungszweck, wobei durch die Zusammensetzung auch die physikalischen Eigenschaften des Endproduktes dem jeweiligen Zweck angepasst werden können.

Die Erfindung wird durch die nachfolgenden Beispiele und Vergleichsbeispiele näher erläutert.

### Beispiel 1 (Vergleichsbeispiel)

68 Gew.% pryrogene Kieselsäure, 30 Gew.% Rutil als Trübungsmittel und 2 Gew.% Silikafasern (6 mm Länge) werden in einem Zwangsmischer intensiv gemischt und dann in einer rechteckigen metallischen Form trocken verpresst mit einem Pressdruck von 0,9 MPa wobei eine Platte mit einer Dichte von 320 kg/m³ entstand. Nach Wegnahme des Pressdruckes und Entformung vergrößerte sich bei einer 15 mm dicken Platte die Dicke um 3 bis 4% durch Zurückfedern und Wiederausdehnen. Der Wärmedämmkörper weist nur eine geringe mechanische Stabilität auf.

### Beispiel 2

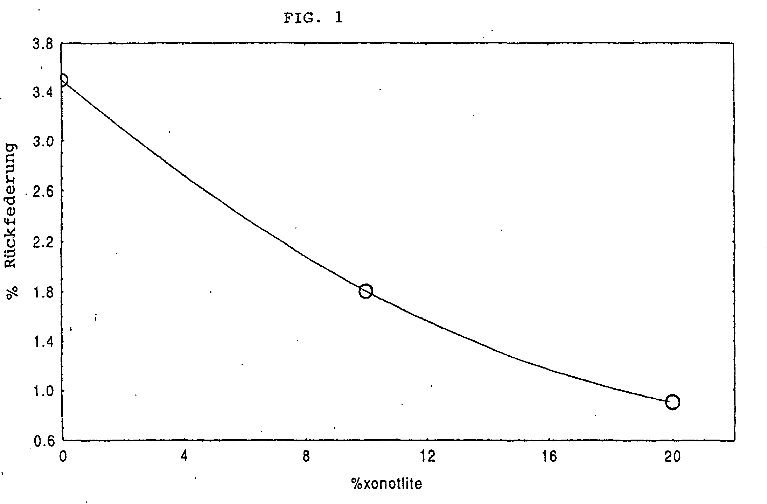

Zu dem Gemisch gemäss Beispiel 1 werden verschiedene Mengen synthetischer Xonotlit (Promaxon ®, Handelsprodukt der Firma Promat N.V., Belgien) zugemischt und wie im Beispiel 1 verpresst. Die Rückfederung und Wiederausdehnung wird durch zunehmende Mengen von Xonotlit deutlich vermindert. Die Daten sind nachfolgend zusammengestellt und in der Figur 1 dargestellt:

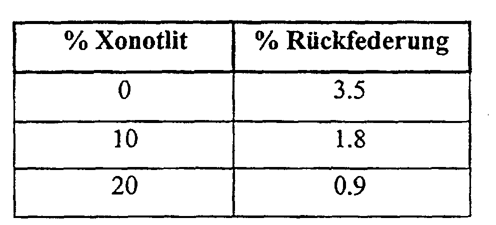

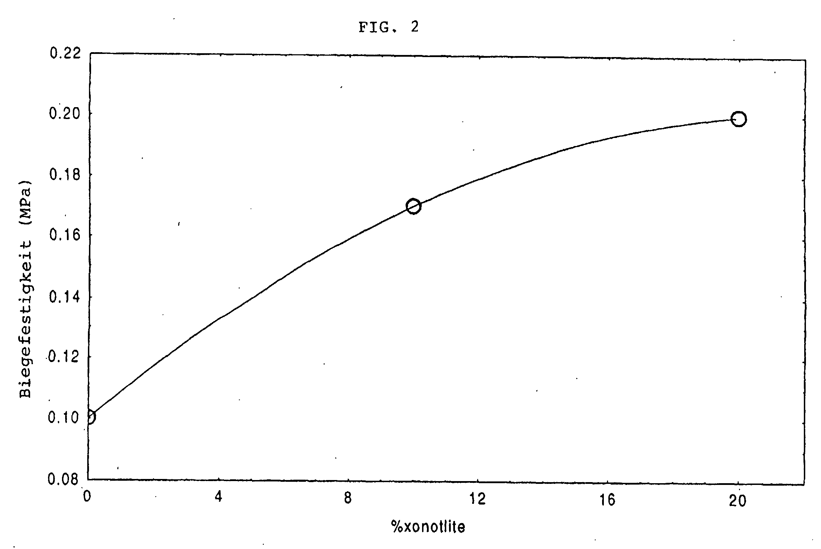

Der Zusatz von Xonotlit erhöht die Biegefestigkeit gemäß nachfolgender Zusammenstellung und Figur 2.

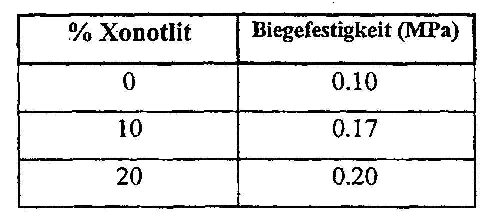

Diesen Daten und der Figur 2 kann entnommen werden, dass der Zusatz von Xonotlit bis zu etwa 20 Gew.% auch die Biegefestigkeit verbessert.

## Patentansprüche

1. Mikroporöser Wärmedämmkörper bestehend aus trocken verpresstem Wärmedämmmaterial enthaltend 30 bis 90 Gew.-% Metalloxiden von Silizium und/oder Aluminium oder Mischungen davon, 0 bis 30 Gew.-% Trübungsmittei, 0 bis 10 Gew.-% anorganisches Fasermaterial und 0 bis 15 Gew.-% anorganisches Bindemittel, **dadurch gekennzeichnet, dass** der Körper zusätzlich 2 bis 45 Gew.-%, vorzugsweise 5 bis 15 Gew.-% Xonotlit enthält.

2. Mikroporöser Wärmedämmkörper gemäß Anspruch 1 mit mindestens zwei Oberflächen, **dadurch gekennzeichnet, dass** eine oder beide Oberflächen eine Abdeckung aus hitzebeständigem Material aufweisen.

3. Mikroporöser Wärmedämmkörper gemäß Anspruch 2, **dadurch gekennzeichnet, dass** die Abdeckung gleich oder verschieden ist und aus vorverpresstem Xonotlit, Glimmer oder Graphit besteht.

4. Mikroporöser Wärmedämmkörper gemäß Anspruch 2 oder 3, **dadurch gekennzeichnet, dass** die Abdeckung auf beiden Oberflächen aus einem vorgefertigten Film aus Glimmer besteht.

## Claims

1. A microporous heat insulation body consisting of a dry-compressed heat insulation material containing from 30 to 90 % by weight of metal oxides of silicon and/or aluminium or mixtures thereof, from 0 to 30 % by weight of an opacifier, from 0 to 10 % by weight of an inorganic fibrous material, and from 0 to 15 % by weight of an inorganic binder, **characterized in that** the body additionally contains from 2 to 45 % by weight, preferably from 5 to 15 % by weight of xonotlite.

2. The microporous heat insulation body according to claim 1 having at least two surfaces, **characterized in that** one or both surfaces have a cover of a heat-resistant material.

3. The microporous heat insulation body according to claim 2, **characterized in that** the covers are the same or different and consist of pre-compressed xonotlite, mica, or graphite.

4. The microporous heat insulation body according to claim 2 or 3, **characterized in that** the cover consists of a prefabricated mica sheet on both sides.

## Revendications

1. Corps calorifuge microporeux, consistant en un matériau calorifuge compacté à sec contenant de 30 à 90 % en poids d'oxydes métalliques de silicium et/ou d'aluminium ou de leurs mélanges, de 0 à 30 % en poids d'opacifiant, de 0 à 10 % en poids d'une matière fibreuse minérale et de 0 à 15 % en poids d'un liant minéral, **caractérisé en ce que** le corps contient en plus de 2 à 45 % en poids, de préférence de 5 à 15 % en poids, de xonotlite.

2. Corps calorifuge microporeux selon la revendication 1, ayant au moins deux surfaces, **caractérisé en ce qu'**une surface ou les deux comportent un revêtement en un matériau résistant à la chaleur.

3. Corps calorifuge microporeux selon la revendication 2, **caractérisé en ce que** les revêtements sont identiques ou différents et consistent en xonotlite, mica ou graphite préalablement compactés.

4. Corps calorifuge microporeux selon la revendication 2 ou 3, **caractérisé en ce que** le revêtement des deux surfaces consiste en une feuille préfabriquée de mica.
